# EUROPÄISCHE PATENTANMELDUNG

(11) **EP 3 808 503 A1**
(43) Veröffentlichungstag der Anmeldung: **21.04.2021**
(21) Anmeldenummer: 19202930.4
(22) Anmeldetag: 14.10.2019
(51) Int. Cl.: B23Q 17/00, B23Q 17/09, B23Q 17/10, B23Q 17/12, B23Q 17/24

(54) **STEUERPLATINE, WERKZEUGHALTER, WERKZEUG, KORRESPONDIERENDE VERWENDUNG UND BEARBEITUNGSMASCHINE**

(71) Anmelder: Albert Knebel Holding GmbH, 72336 Balingen (DE)
(72) Erfinder: Die Erfindernennung liegt noch nicht vor
(74) Vertreter: Mertzlufft-Paufler, Cornelius

(57) **Zusammenfassung**

Bei einem Werkzeughalter (1) wird vorgeschlagen, eine Steuerplatine (7) zum Datenaustausch mit einem eingesetzten Werkzeug (5) zu verwenden (Fig. 1).

## Beschreibung

Die Erfindung betrifft eine Steuerplatine, welche insbesondere wenigstens einen Sensor und wenigstens ein Speichermedium enthält und/oder mit einer Funkschnittstelle ausgestattet ist, um einen Bearbeitungsprozess auf einer Bearbeitungsmaschine in Echtzeit zu überwachen.

Derartige Steuerplatinen sind bekannt und werden beispielsweise in Steuerungen von Bearbeitungsmaschinen eingesetzt, um Daten eines Werkzeugs zu erfassen. Die Sensoren sind hierbei beispielsweise außerhalb der Steuerung angeordnet, beispielsweise um Kennungen an Werkzeugen optisch auslesen zu können.

Die Erfindung betrifft weiter einen Werkzeughalter, ein Werkzeug, eine Verwendung einer Steuerplatine und eine Bearbeitungsmaschine.

Im Rahmen der zunehmenden Durchdringung von Industrie-4.0-Themen im Bereich der zerspanenden Bearbeitungsmaschinen, insbesondere Werkzeugmaschinen, ist die exakte Kenntnis über das in der Maschine arbeitende Zerspanungswerkzeug immer wichtiger. Durch das Werkzeug werden wichtige Prozessparameter wie z. B. die Drehzahl oder der Vorschub definiert, die zur spanenden Bearbeitung von Bauteilen notwendig sind.

Generell können Prozessdaten in zwei unterschiedliche Arten eingeteilt werden. Die erste Art von Daten kann der Werkzeughersteller mit jedem Werkzeug liefern. Dabei handelt es sich um maximale oder minimale Begrenzungswerte, die auch sicherheitsrelevant sein können. Auch können beschreibende Daten mitgeliefert werden. Hierbei ist z. B. das Gewicht, die Wuchtgüte oder unterschiedliche Abmessungen zu nennen. Insbesondere die geometrischen Abmessungen können direkt zur Bauteilbearbeitung im NC-Programm der Maschine verwendet werden. Zudem können empfohlene Einsatzdaten mitgegeben werden, wie z.B. Drehzahl (n), Vorschub (vf), Vorschub pro Zahn (fz) oder die Schnittgeschwindigkeit (vc). Diese Daten bilden die Basis für die zweite Art von Prozessparametern. Der Maschinenbediener hat die Aufgabe, den Zerspanungsprozess in der Maschine einzustellen. Hierbei werden die empfohlenen Einsatzdaten mit eigenen Erfahrungswerten abgeglichen und optimiert. Dabei ist es nicht unüblich, dass sich der Maschinenbediener auf sein Gehör verlässt, um die Zerspangeräusche zu bewerten. Zudem erfolgt eine optische Kontrolle der Schnittqualität. Sind die optimalen Parameter gefunden, finden in der Regel nur noch wenige Änderungen an den Prozessparametern statt. Auf Prozessschwankungen durch beispielsweise Materialeinflüsse oder Aufspannungssituationen kann kaum eingegangen werden. Insbesondere bei mannlosen Schichten fehlen Rückmeldungen an den Bediener. Die genannten Einsatzparameter können um Schwingungs- oder Temperaturmesswerte ergänzt werden. Durch diese Ergänzung besteht die Möglichkeit, dass sich die Anforderungen für die Einsatzdaten ändern. In vielen modernen Bearbeitungsmaschinen sind Spindelwächter integriert, die in der Regel nur im Extremfall in die Prozessbetrachtung einfließen. Als Beispiel ist die Resonanzkatastrophe zu nennen.

Dem Kunden eine Kombination von fixen Werkzeugparametern und dynamischen Messwerten zur Verfügung zu stellen, ist für die Werkzeughersteller äußerst schwierig. Für die Optimierung von Prozessen und zum optimalen Einsatz der Werkzeuge sind dynamische Messwerte allerdings notwendig. Zur Realisierung dieser Kombination ist bisher immer eine Kooperation mit dem Maschinen- oder Anlagenhersteller erforderlich. Die Vielzahl der Maschinenhersteller und die Anzahl unterschiedlicher Standards erschweren eine effektive Gestaltung von Entwicklungsprojekten und ebenso eine gute Marktdurchdringung für erarbeitete Konzepte. Aus der Sicht der Hersteller von Zerspanungsmaschinen sieht es nicht anders aus. Bei dem eindeutigen Identifizieren des Werkzeugs sind die Maschinenhersteller auf die Werkzeughersteller angewiesen. Zum Stand der Technik zählt eine Reihe von adaptiven Systemen, welche auf die Integration in die Maschinensteuerungen angewiesen sind. Ein Nachrüsten älterer Maschinen ist häufig nicht machbar oder unwirtschaftlich. Hinzu kommt, dass das Auslesen von Werkzeugdaten vom Werkzeug direkt oder durch Auslesen einer Werkzeugkennung vom Werkzeug nur in wenigen Fällen umgesetzt werden kann. In der Regel kann diese Eigenschaft bei Spezialmaschinen z. B. Sägemaschinen ohne Werkzeugwechsler realisiert werden. Die genannten Gründe tragen dazu bei, dass sich diese Technologie insbesondere bei CNC-Fräsmaschinen nicht durchsetzen konnte.

Ein weiterer und sehr wichtiger Aspekt der Werkzeugoptimierung aus Sicht der Werkzeughersteller ist die Möglichkeit, durch das Gewinnen von echten Prozessdaten eine weitere Optimierung der Werkzeuge durchführen zu können. Mit Zustimmung des Kunden wäre der Werkzeughersteller in der Lage, die gewonnenen Prozessdaten der Produkte in die Produktentwicklung einfließen zu lassen. So kann nicht nur die time-to-market verkürzt werden. Wesentlich ist auch eine ressourcenschonende Entwicklung durchzuführen. Auf dem Weg zum marktreifen Produkt kann der Werkzeughersteller mit weniger Prototypen das Ziel erreichen.

Aus der beschriebenen Situation definiert sich folgende Aufgabe für die Werkzeughersteller mit dem Blick auf eine autarke Lösung bei der Prozessoptimierung beim Kunden: Gesucht ist ein System und ein Produkt, dass die werkzeugrelevanten Daten aus dem eindeutig identifizierten Werkzeug auslesen kann und diese mit Prozessmesswerten kombiniert ohne einen zwingend notwendigen Zugriff auf die Maschinensteuerung zu haben. Auf dieser Basis soll dem Maschinenbediener oder der Maschine oder Anlage eine Unterstützung bei der Prozessoptimierung oder bei der Reaktion auf prozessbedingte Schwankungen gegeben werden. Im einfachsten Fall soll dem Maschinenbediener oder der Maschine oder Anlage die Möglichkeit gegeben werden, das aktive Werkzeug eindeutig zu erkennen. Zudem muss das System oder Produkt bei CNC Fräsmaschinen mit Werkzeugwechsler mühelos funktionieren. Damit eine gute Marktdurchdringung erzielt werden kann, ergänzt sich die Aufgabe durch die Notwendigkeit, dass der Kunde in der Lage sein muss, das System oder Produkt auf älteren, bestehenden Maschinen nutzen zu können, ohne diese verändern zu müssen. Im Sinne des Industrie-4.0-Gedankens ist ein offenes System gefordert, dass auf IoT Basis kommunizieren kann.

Zur Lösung der Aufgabe sind bei einer Steuerplatine erfindungsgemäß die Merkmale des Anspruchs 1 vorgesehen. Insbesondere ist somit erfindungsgemäß bei einer Steuerplatine zur Lösung der Aufgabe vorgesehen, dass die Steuerplatine in einen Werkzeughalter oder eine Werkzeugaufnahme einbringbar oder eingebracht ist, wobei die Steuerplatine im eingebauten Zustand und während des Betriebs einer Bearbeitungsmaschine Prozess- und Messdaten, von einem in dem Werkzeughalter montierten Werkzeug lesen kann.

Insbesondere kann hierbei vorgesehen sein, dass die Steuerplatine wenigstens einen Sensor und wenigstens ein Speichermedium enthält. Alternativ oder zusätzlich kann vorgesehen sein, dass die Steuerplatine mit einer Funkschnittstelle ausgestattet ist, um einen Bearbeitungsprozess auf einer Bearbeitungsmaschine in Echtzeit zu überwachen.

Alternativ oder zusätzlich kann zur Lösung der genannten Aufgabe vorgesehen sein, dass die Steuerplatine im eingebauten Zustand und während des Betriebs einer Bearbeitungsmaschine Prozess- und Messdaten auf ein in dem Werkzeughalter montiertes Werkzeug schreiben kann. Somit können beispielsweise Daten über den Einsatz, die Einsatzart, die Einsatzbelastung und/oder die Einsatzdauer auf einfache Weise in dem Werkzeug hinterlegt und bei späteren Einsätzen weiterverwendet werden.

Die Erfindung bietet somit die Möglichkeit, eine sensorische Steuerplatine bereitzustellen, deren Geometrie so ausgelegt ist, dass sie in einen Werkzeughalter montiert werden kann. Die Erfindung ermöglicht somit, dass die Steuerplatine in dem Werkzeughalter eine Schnittstelle zwischen Werkzeug und Maschinenbediener bildet. Eine Integration in die Bearbeitungsmaschine bzw. deren Steuerung ist somit nicht zwingend erforderlich. Vielmehr kann vorgesehen sein, dass die sensorische Steuerplatine Werkzeugdaten im eingebauten Zustand und während des Betriebs der Bearbeitungsmaschine Prozess- und Messdaten von dem in dem Werkzeughalter montierten Werkzeug liest und diese Daten über eine drahtlose Verbindung weitergibt.

Es ist somit die Implementierung einer Lese- und/oder Schreibeinheit in einen Werkzeughalter realisierbar. Um diese zu realisieren, kann die Lese- und/oder Schreibeinheit in eine oder mehrere miteinander verbundene Steuerplatinen integriert sein. Die Steuerplatine(n) kann/können Sensoren besitzen, um Prozessdaten zu erfassen. Diese Steuerplatine kann beispielsweise Daten vom Werkzeug lesen und ggf. wieder auf das Werkzeug schreiben. Dazu kann das Werkzeug mit einem Speicherchip ausgestattet sein. In einigen Fällen (je nach Technologie) ist ein physikalischer, kurzzeitiger Kontakt zwischen dem Speicherchip des Werkzeugs und der Steuerplatine zum Lesen und Schreiben der Daten notwendig. Hierfür könnte die Steuerplatine wenigstens einen entsprechenden Gegenkontakt bieten. Es hat sich herausgestellt, dass die ideale Position der Kontakte mittig im inneren des Werkzeughalters ist. Auf der Steuerplatine können Werkzeugdaten eines Speicherchips von einem Werkzeug und Messwerte der Sensoren der Steuerplatine selbst oder eines Werkzeugs verarbeitet werden. Zudem kann die Steuerplatine über eine drahtlose Verbindung z. B. Bluetooth, WLAN, Zigbee, NFC mit einem Kollektor kommunizieren, der wiederum die Daten an ein Netzwerk weiterleiten kann. Es ist auch möglich, dass die Steuerplatine direkt mit einem mobilen Endgerät kommuniziert. Damit die Steuerplatine im Werkzeughalter autark arbeiten kann, ist eine Energiequelle von Vorteil. Außerdem bedarf es unter Umständen Abstandshaltern für die einzelnen Steuerplatinen, sowie Haltern für die Energiequelle, als auch einem Verschlussdeckel der die einzelnen Komponenten an einer Stelle fixiert. Diese Gesamteinheit, im weiteren als Steuerplatine bezeichnet, muss im Werkzeughalter Platz finden.

Eine Integration in die Maschinensteuerung ist möglich, wichtiger ist allerdings, dass diese Integration nicht notwendig ist.

Durch diesen Lösungsansatz ist der Werkzeughersteller in der Lage, dem Kunden einen Mehrwert zu liefern. Der Mehrwert besteht nicht nur in der gezielten Prozessoptimierung durch die Kombination aus mitgelieferten Werkzeugdaten und der Verarbeitung von gemessenen Prozessdaten, sondern auch in dem einfachen Auslesen der Werkzeugdaten. Zudem können Meldungen wie Alarme, Hinweise und Empfehlungen an den Bediener übermittelt werden.

Der Werkzeughalter fällt in das Produktportfolio des Werkzeugherstellers. Dadurch können das Werkzeug mit den Daten, der Werkzeughalter mit der Steuerplatine und die Prozessoptimierung als System und Produkt im Markt maschinenunabhängig angeboten werden.

Hierdurch ist der Werkzeughersteller in der Lage, ein Gesamtsystem an Kunden auszuliefern, ohne auf Systemkomponenten angewiesen zu sein, die nicht im direkten Einfluss stehen. Weder ein Computer noch ein Lesegerät muss vom Kunden zwingend zur Verfügung gestellt werden.

Beispielsweise kann für eine Cloud-basierte Kommunikation eine Verbindung zum Internet aufbaubar oder bereitgestellt sein, wobei auch diese mitgeliefert werden kann. Zeitgemäß ist auch die Verwendung von mobilen Endgeräten zur Mensch-Maschine-Kommunikation bzw. zur Mensch-Werkzeug-Kommunikation. Hierdurch können auch Kunden bedient werden, die Ihre Daten nicht außerhalb Ihres Unternehmens speichern möchten. Eine problemlose Integration des Industrie-4.0-Gedankens auf Maschinen mit älteren Steuerungen ist machbar.

Durch die Systemarchitektur (Steuerplatine/Kollektor) ist eine Kommunikation mit vielen Maschinen bzw. Werkzeughaltern machbar und wünschenswert. Hierbei ist es unerheblich, ob der Kollektor direkt mit der PLC (Maschinensteuerung) oder einem Leitrechner bzw. Bedienterminal kommuniziert.

Bei den Werkzeughaltern im Bereich der CNC-Fräsen hat sich die Verwendung von HSK-Schnittstellen (HSK=Hohlschaftkegel) durchgesetzt. Zu einer HSK-Schnittstelle gehört der Kegel, ein Anlagebund und die Greifer-Rille. Diese HSK-Schnittstellen sind, je nach Anforderungen, in unterschiedlichen Ausführungen verfügbar. Dabei variieren im Wesentlichen die Größe des Kegels und der Durchmesser der Anlagefläche. Die Größe des Kegels ist für die Erfindung der wichtigere Aspekt. Da alle Hohlschaftkegel mit einem Steigungsverhältnis von ca. 1:10 gefertigt werden, ist der Innendurchmesser für die Implementierung von besonderer Bedeutung. Die Montage der Platine kann durch diesen Innendurchmesser geschehen. Das bedeutet, der Innendurchmesser definiert den maximalen Durchmesser der Platine und der Energiequelle. Der aktuelle Stand der Technik bei der Batterieentwicklung lässt einen Einsatz in einem HSK-Werkzeughalter mit einer Kegelgröße zu, die z. B. in dem HSK50E oder im HSK63F Verwendung findet ohne eine geometrische Veränderung der äußeren Abmessungen vorzunehmen. Für kleinere Kegel ist die Integration generell möglich, allerdings ist eine geometrische Verlängerung der Werkzeugaufnahme nötig. Neben der HSK-Schnittstelle ist auch, insbesondere bei älteren Maschinen eine SK-Schnittstelle (SK=Steilkegel) weit verbreitet. Auch hier kann eine Platine mit anderer Bauform und anderer Energiequelle eingebracht werden. Aufgrund der langen Bauform des Kegels kann die Steuerplatine hier in die wesentlich kleinere Öffnung verbaut werden. Bei fast allen Maschinen ist es notwendig, in diese Öffnung den Einzugsbolzen einzuschrauben. Diese Möglichkeit besteht nach wie vor.

Es sei darauf hingewiesen, dass die derzeitige Kühlmitteldurchführung durch das Zentrum des Halters insbesondere bei HSK-Schnittstellen nicht in jedem Fall möglich ist. Es gibt Elemente auf der Steuerplatine, die Ihre physikalischen Eigenschaften optimal im Zentrum des Halters ausspielen können. Eine Durchleitung von Kühlmittel ist allerdings nach wie vor möglich.

Die Position der Antenne und einer Kontrollleuchte ist für die Funktion der Steuerplatine ebenso notwendig. Es hat sich herausgestellt, dass eine ideale Position für die Antenne direkt am Bund der Greiferrille auf der Werkzeugseite ist. Hier kann das Kabel für die Antenne sinnvoll durchgeführt werden, zudem wird von hier aus eine große Reichweite erzielt. Die Antenne wird vorzugsweise mit einer Kunststoffabdeckung geschützt. Zudem kann auf gleiche Weise eine Signalleuchte in Form einer LED angebracht werden. Um die optische Rückmeldung durch die LED für den Bediener sichtbar zu machen, kann das Gehäuse aus lichtdurchlässigem Material bestehen. Auf diese Weise kann die LED vor Beschädigungen durch Staub oder Kühlschmierstoff geschützt werden.

Der Werkzeughalter muss so gestaltet sein, dass er die Platine vor Staub und Kühlschmierstoff schützt.

In CNC-Fräsmaschinen wird häufig mit Aggregaten gearbeitet, die unterschiedliche Aufgaben erfüllen. In vielen Fällen werden in die Aggregate, ebenso wie bei den Werkzeughaltern, Werkzeuge eingebaut. Auch bei diesen Anwendungen kann die vorliegende Erfindung Verwendung finden. Bauartbedingt ist es hier jedoch nicht zwingend erforderlich, dass die Steuerplatine durch den HSK eingebaut wird. Auf dem Gehäuse der Aggregate finden sich einige, ideale Stellen zur Positionierung der Steuerplatine. Viele Aggregate beinhalten ein Getriebe, welches die Situation zum Auslesen der Werkzeuge verändert. Die beschriebene Position im Inneren der Werkzeugaufnahme ist häufig nicht machbar. Die Steuerplatine kann in einem eigenen Gehäuse außen auf das Aggregatgehäuse befestigt werden. Das Gehäuse der Steuerplatine kann Kontakte enthalten, mit denen die Werkzeuge gelesen und beschrieben werden können. Durch diese Methode wird das Grundprinzip der Lösung, und damit der Erfindung nicht verändert.

Werkzeughalter und Aggregate kommen nicht nur in Werkzeugaufnahmen für CNC-Fräsmaschinen zum Einsatz. Zur Aufnahme von Werkzeugen mit zentrischer Aufnahmebohrung wie z.B. Kreissägeblätter, Fräswerkzeuge auf stationären Maschinen werden einfache Buchsen oder Flansche mit Spanndeckel verwendet. Die Erfindung kann auch in dieser Art von Werkzeugaufnahme und Spanndeckel integriert werden. Bei diesen Werkzeugaufnahmen stellt sich die Integration der Steuerplatine aufgrund der Bauweise der Aufnahmen weniger problematisch dar. Dadurch ist die Technologie in nahezu allen Bereichen der Zerspanenden-Industrie verwendbar. Auch hier können die Kontakte so angebracht sein, dass die Daten des Werkzeugs im eingebauten Zustand gelesen und geschrieben werden können.

Bei einer Ausgestaltung der Erfindung kann vorgesehen sein, dass die Steuerplatine durch ihre Bauform von einer der Antriebsspindel zugewandten Seite her, beispielsweise in einen Hohlschaftkegel oder Steilkegel des Werkzeughalters, eingesetzt werden kann. Somit ist eine einfache Wartung und/oder Nachrüstung möglich.

Bei einer Ausgestaltung der Erfindung kann vorgesehen sein, dass die Steuerplatine bezogen auf die Rotationsachse des Werkzeughalters einen mittigen Kontakt zur Verbindung mit dem montierten Werkzeug hat oder beim Einbau vorübergehend Kontakt herstellen kann. Somit ist das Werkzeug in beliebiger Orientierung kontaktierbar.

Bei einer Ausgestaltung der Erfindung kann vorgesehen sein, dass die Steuerplatine im eingebauten Zustand und während des Betriebs der Bearbeitungsmaschine Werkzeugdaten vom Werkzeug lesen kann und/oder auf das Werkzeug schreiben kann. Von Vorteil ist dabei, dass ein Regelkreis bildbar ist und dass Stillstandszeiten für eine Parametrierung der Bearbeitungsmaschine vermeidbar oder reduzierbar sind. Insbesondere kann hierbei vorgesehen sein, dass die Werkzeugdaten Vorgabewerte für den Einsatz und/oder Messwerte aus dem Einsatz umfassen.

Bei einer Ausgestaltung der Erfindung kann vorgesehen sein, dass die Steuerplatine die Daten mittels einer auf einer Außenhülle des Werkzeughalters angebrachten Antenne kommuniziert. Somit ist eine gute Signalabstrahlung erreichbar. Beispielsweise kann hierbei vorgesehen sein, dass die Antenne unmittelbar unterhalb der Greiferrille und/oder unter einer ringförmigen Schutzabdeckung angebracht ist. Somit ist ein Platzverbrauch gering haltbar und/oder es ist eine Beschädigung oder Verschmutzung der Antenne vermeidbar.

Bei einer Ausgestaltung der Erfindung kann vorgesehen sein, dass die Steuerplatine in der Lage ist, mit IoT-Systemen und Komponenten solcher Systeme zu kommunizieren. Somit sind Regelkreis bildbar und Daten einfach verwaltbar.

Bei einer Ausgestaltung der Erfindung kann vorgesehen sein, dass die Steuerplatine als Bestandteil eines Regelkreises integriert werden und Daten im Prozess aufnehmen und bereitstellen kann. Somit sind Eigenschaften des Werkzeugs einfach einspeisbar in einen Regelkreis.

Bei einer Ausgestaltung der Erfindung kann vorgesehen sein, dass die Steuerplatine im Werkzeughalter gewartet werden kann oder falls erforderlich, aufgrund ihrer Einbauart auch nachträglich ausgetauscht, werden kann. Somit ist eine Veränderung des Werkzeughalters vermeidbar.

Bei einer Ausgestaltung der Erfindung kann vorgesehen sein, dass eine Energiequelle, beispielsweise eine Batterie, der Steuerplatine im Werkzeughalter angeordnet ist. Somit ist die Steuerplatine an einem drehenden Teil autark betreibbar. Bevorzugt kann die Energiequelle ausgetauscht werden ohne die Steuerplatine zu entfernen.

Zur Lösung der genannten Aufgabe wird weiter ein Werkzeughalter mit einer erfindungsgemäßen Steuerplatine, insbesondere wie zuvor beschrieben und/oder nach einem der auf eine Steuerplatine gerichteten Ansprüche, vorgeschlagen.

Bei einer Ausgestaltung der Erfindung kann vorgesehen sein, dass die Steuerplatine in einer Bohrung angeordnet ist. Hierbei kann vorgesehen sein, dass wenigstens ein Kontakt der Steuerplatine in eine Werkzeugaufnahme des Werkzeughalters ragt. Es ist somit eine einfache galvanische Ankopplung zur Ausbildung einer Datenverbindung zwischen der Steuerplatine und dem Werkzeug erreichbar. Beispielsweise kann die Steuerplatine in einer Axialbohrung angeordnet sein.

Bei einer Ausgestaltung der Erfindung kann vorgesehen sein, dass in dem Werkzeughalter eine Energiequelle für die Steuerplatine angeordnet ist. Somit ist die Steuerplatine autark betreibbar.

Bei einer Ausgestaltung der Erfindung kann vorgesehen sein, dass an einer Außenhülle des Werkzeughalters eine Antenne ausgebildet ist, die mit der Steuerplatine zur Ausbildung einer Funkschnittstelle elektrisch verbunden ist. Es sind somit Daten nach außen übertragbar. Beispielsweise kann die Antenne unmittelbar unterhalb einer Greiferrille sein. Es kann auch vorgesehen sein, dass die Antenne unter einer ringförmigen Schutzabdeckung ausgebildet ist. Somit kann die Antenne geschützt angeordnet werden.

Zur Lösung der genannten Aufgabe ist bei einem Werkzeug erfindungsgemäß vorgesehen, dass das Werkzeug von einem Werkzeughalter mit einer erfindungsgemäßen Steuerplatine, insbesondere wie zuvor beschrieben und/oder nach einem der auf eine Steuerplatine gerichteten Ansprüche, aufgenommen werden kann und dass das Werkzeug mit einem elektronisch auslesbaren Speichermedium ausgerüstet und/oder mit wenigstens einem Sensor, insbesondere mehreren Sensoren, ausgestattet ist, um im eingebauten Zustand und während des Einsatzes Daten, insbesondere Prozesskennwerte und Messdaten aufzunehmen und an die Steuerplatine weiterzugeben. Somit sind Daten vom Werkzeug, beispielsweise aus einem Speichermedium oder von Sensoren, einfach auslesbar.

Bei einer vorteilhaften Ausgestaltung kann vorgesehen sein, dass das Speichermedium und/oder der wenigstens eine Sensor mit wenigstens einem Gegenkontakt verbunden ist/sind, die in einem zur Aufnahme in dem Werkzeughalter eingerichteten Befestigungsabschnitt des Werkzeugs angeordnet sind. Somit ist eine einfache galvanische Datenübertragung realisierbar. Die Datenübertragung ist automatisch beim Einsetzen des Werkzeugs herstellbar.

Zur Lösung der genannten Aufgabe wird eine Verwendung einer Steuerplatine, beispielsweise einer erfindungsgemäßen Steuerplatine, insbesondere wie zuvor beschrieben und/oder nach einem der auf eine Steuerplatine gerichteten Ansprüche, in einem erfindungsgemäßen Werkzeughalter, insbesondere in einem Werkzeughalter wie zuvor beschrieben und/oder nach einem der auf einen Werkzeughalter gerichteten Ansprüche, zum Auslesen von an einem in den Werkzeughalter eingesetzten erfindungsgemäßen Werkzeug, insbesondere einem Werkzeug nach einem der auf ein Werkzeug gerichteten Ansprüche, bereitgestellten Daten vorgeschlagen.

Hierbei kann vorgesehen sein, dass die Steuerplatine die ausgelesenen Daten über eine Funkschnittstelle abgibt und/oder empfängt. Es ist somit eine Übermittlung an eine Vielzahl von Empfängern durchführbar.

Die Erfindung wird nun anhand von Ausführungsbeispielen näher erläutert, ist jedoch nicht auf diese Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt:
- Fig. 1: einen erfindungsgemäßen Werkzeughalter mit einem erfindungsgemäßen Werkzeug in einer Explosionsdarstellung von der Seite,
- Fig. 2: den Werkzeughalter aus Figur 1 zusammengesetzt/ zusammengebaut in einem Axialschnitt,
- Fig. 3: ein vergrößertes Detail aus Figur 2, den Werkzeughalter aus Figur 1 in einem Axialschnitt,
- Fig. 4: einen Blick auf die Werkzeug-abgewandte Seite des Werkzeughalters aus Figur 1,
- Fig. 5: einen Blick auf die Werkzeug-zugewandte Seite des Werkzeughalters aus Figur 1,
- Fig. 6: einen weiteren erfindungsgemäßen Werkzeughalter in einer Ansicht von der Seite,
- Fig. 7: den Werkzeughalter aus Figur 6 in einem Axialschnitt,
- Fig. 8: einen Blick auf die Werkzeug-abgewandte Seite des Werkzeughalters aus Figur 6,
- Fig. 9: einen Blick auf die Werkzeug-zugewandte Seite des Werkzeughalters aus Figur 6,
- Fig. 10: eine Detailansicht aus Figur 7,
- Fig. 11: eine dreidimensionale Schrägansicht auf einen Kollektor,
- Fig. 12: eine Prinzipskizze eines Gesamtsystems für eine erfindungsgemäße Verwendung und
- Fig. 13: eine schematische Darstellung einer erfindungsgemäßen Bearbeitungsmaschine.

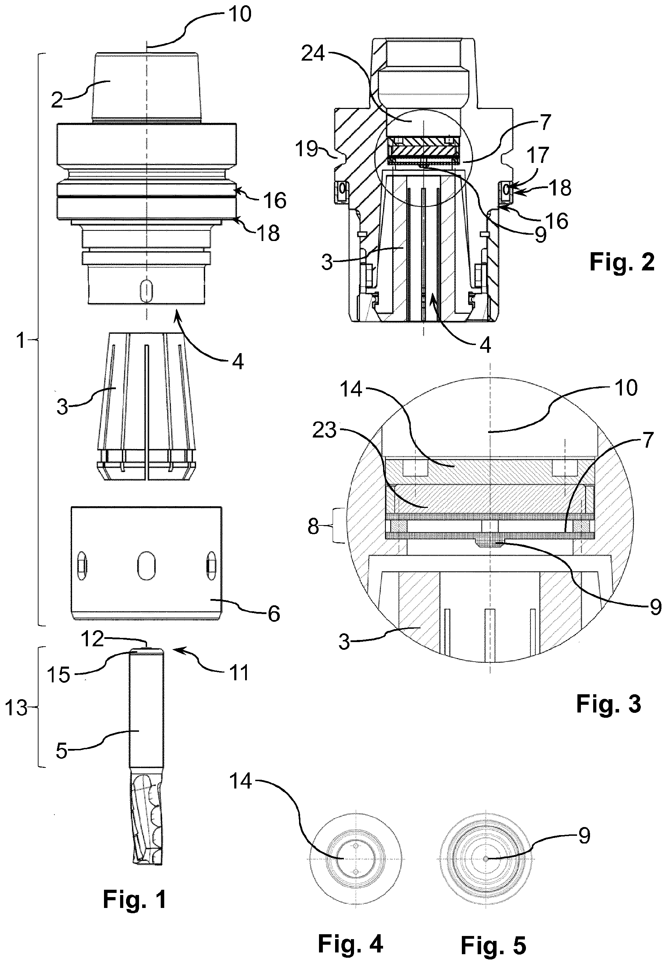

Figur 1 zeigt einen im Ganzen mit 1 bezeichneten Werkzeughalter, der in an sich bekannter Weise beispielhaft mit einem Hohlschaftkegel 2 ausgerüstet ist.

Der Werkzeughalter 1 hat in bekannter Weise eine Spannzange 3, die in eine Werkzeugaufnahme 4 für ein Werkzeug 5 einsetzbar ist. Eine Spannmutter 6 dient zum Klemmen des Werkzeugs 5 in der Werkzeugaufnahme 4.

In die Werkzeugaufnahme 4 ist wenigstens eine Steuerplatine 7 eingesetzt, vgl. Figur 2 und 3. Im Beispiel ist eine Stapelanordnung 8 mit zwei Steuerplatinen ausgebildet.

An der Steuerplatine 7 ist wenigstens ein Kontakt 9 ausgebildet, der in die Werkzeugaufnahme 4 so hineinragt, dass ihn ein Werkzeug 5, das in die Werkzeugaufnahme 4 eingesetzt wird, kontaktiert.

Die Steuerplatine 7 ist so eingerichtet, dass Daten über den wenigstens einen Kontakt 9 gelesen und/oder geschrieben werden können.

Der wenigstens eine Kontakt 9 ist mittig oder konzentrisch in Bezug auf eine Rotationsachse 10 des Werkzeughalters 1 ausgerichtet.

An dem Werkzeug 5 ist an dem proximalen Ende 11, das in die Werkzeugaufnahme 4 eingeführt wird, und somit in einem Befestigungsabschnitt 13 ein Gegenkontakt 12 ausgebildet. Die Lages des Gegenkontakts 12 korrespondiert zur Lage des Kontakts 9.

Bei weiteren Ausführungsbeispielen sind mehrere, beispielsweise ringförmige, Kontakte und/oder Gegenkontakte ausgebildet.

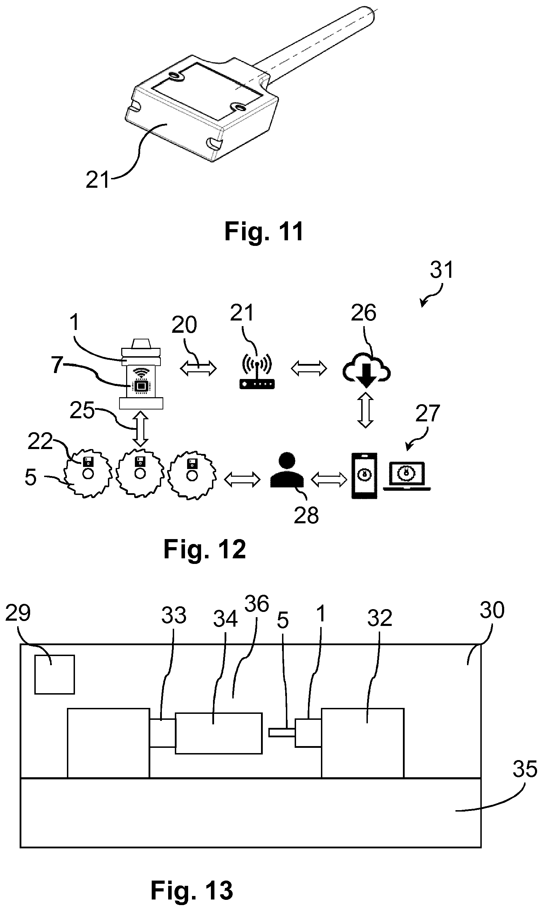

Somit kann die Steuerplatine 7 nach Figur 2 und 3 im eingebauten Zustand im Werkzeughalter 1 und während des Betriebs einer Bearbeitungsmaschine 30 (vgl. Fig. 13) Prozess-und Messdaten von einem in dem Werkzeughalter 1 montierten Werkzeug 5 lesen und auf dieses schreiben.

Die Steuerplatine 7 kann Sensoren und/oder ein Speichermedium für unterschiedliche Aufgaben aufweisen.

Die Stapelanordnung 8 ist von der Werkzeug-abgewandten Seite, also der einer Antriebsspindel 32 (vgl. Fig. 13) zugewandten Seite, her in den Hohlschaftkegel einsetzbar. Ein Deckel 14 fixiert die Stapelanordnung 8.

Am proximalen Ende 11 ist ferner eine Elektronik 15 ausgebildet, die ein Speichermedium 22 (vgl. Fig. 11) und/oder wenigstens einen Sensor, beispielsweise einen Temperatursensor und/oder einen Vibrationssensor, aufweist. In dem Werkzeug 5 können somit Vorgabewerte für den Einsatz und Messwerte aus dem Einsatz bereitgehalten, erzeugt und/oder verarbeitet werden.

Außenseitig ist an dem Werkzeughalter 1 an der Außenhülle 16 eine Antenne 17 angeordnet, die im Beispiel hinter einer Schutzabdeckung 18 verborgen ist.

Im Ausführungsbeispiel ist die Antenne 17 umlaufend ausgebildet und benachbart zu der Greiferrille 19 angeordnet.

Die Antenne 17 bildet somit eine Funkschnittstelle 20 (vgl. Fig. 12) zu einem Kollektor 21 (vgl. Fig. 11), der außerhalb der Bearbeitungsmaschine 30 angeordnet sein kann.

Zwischen dem Deckel 14 und der Stapelanordnung 8 ist eine Energiequelle 23 angeordnet, welche die Steuerplatine 7 versorgt. Es ist ersichtlich, dass die Energiequelle 23 ausgetauscht werden kann, ohne die Steuerplatine 7 entfernen zu müssen. Hierzu sind die Energiequelle 23 und die Stapelanordnung 8 in einer Bohrung 24, hier einer Axialbohrung, angeordnet, die mit dem Deckel 14 verschließbar ist.

Figur 12 zeigt das Gesamtsystem zur Erläuterung der erfindungsgemäßen Verwendung einer Steuerplatine 7.

Die Steuerplatine 7 ist in dem Werkzeughalter 1 angeordnet und stellt eine Datenverbindung 25 mit einem Werkzeug 5 her, wenn dieses in den Werkzeughalter 1 eingesetzt wird. Die Steuerplatine 7 liest über die Datenverbindung 25 Daten aus, beispielsweise Prozesskennwerte und/oder Messdaten, und übermittelt diese über die Funkschnittstelle 20 an den Kollektor 21. Der Kollektor 21 ist mit einer Cloud 26 verbunden und übermittelt die Daten dorthin.

Die Cloud 26 ist über einen Computer 27 zugänglich, der diese Daten einem Benutzer 28 zu Kenntnis bringen oder an eine Steuerung 29 einer Bearbeitungsmaschine 30 (vgl. Fig. 13), zu welcher der Werkzeughalter 1 gehört, übermittelt.

Es ist somit ein Regelkreis 31 geschaffen. Daten und Befehle können hier auch in umgekehrter Richtung übertragen werden.

Figur 13 zeigt eine Bearbeitungsmaschine 30 mit einem erfindungsgemäßen Werkzeughalter 1, der ein erfindungsgemäßes Werkzeug 5 trägt und der an einer Antriebsspindel 32 montiert ist.

Die Antriebsspindel 32 steht auf einem Maschinenbett 35 und definiert einen Bearbeitungsraum 36.

Der Kollektor 21 ist außerhalb dieses Bearbeitungsraums 36 angeordnet.

Der Kollektor 21 kommuniziert mit der Steuerplatine 7 im Werkzeug 5 und mit der Steuerung 29.

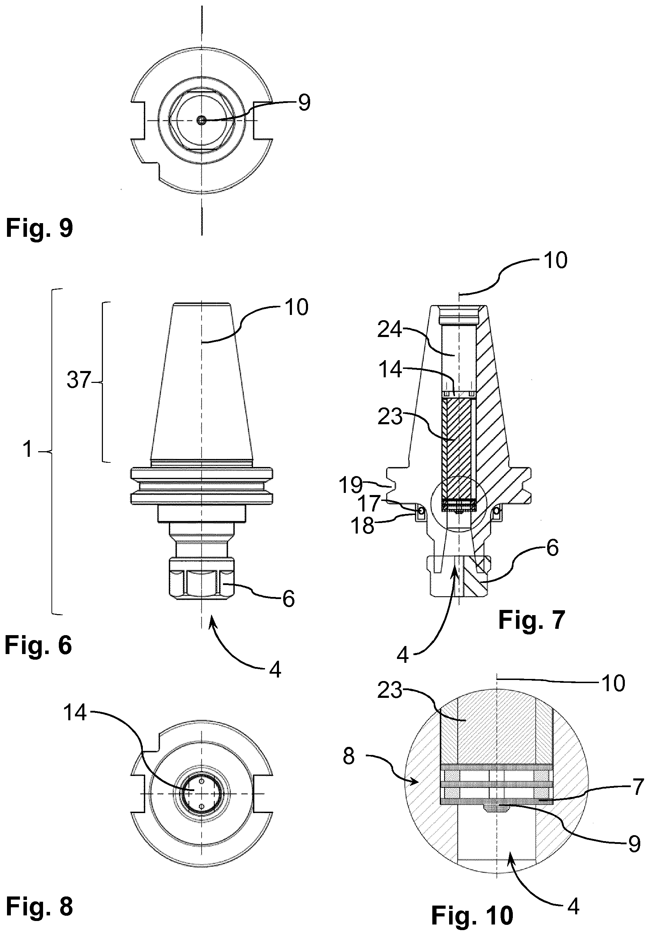

Figuren 6 bis 10 zeigen ein weiteres erfindungsgemäßes Ausführungsbeispiel. Konstruktiv und/oder funktionell zu dem vorausgehenden Ausführungsbeispiel gleichartige oder identische Bauteile und Funktionseinheiten sind mit denselben Bezugszeichen versehen und nicht noch einmal gesondert beschrieben. Die Ausführungen zu den Figuren 1 bis 5 und 11 bis 13 gelten zu den Figuren 6 bis 10 entsprechend.

Das Ausführungsbeispiel unterscheidet sich von dem vorangegangenen Ausführungsbeispiel zumindest dadurch, dass der Werkzeughalter einen Steilkegel 37 aufweist.

Bei einem Werkzeughalter 1 wird somit vorgeschlagen, eine Steuerplatine 7 zum Datenaustausch mit einem eingesetzten Werkzeug 5 zu verwenden.

### Bezugszeichenliste

- 1: Werkzeughalter
- 2: Hohlschaftkegel
- 3: Spannzange
- 4: Werkzeugaufnahme
- 5: Werkzeug
- 6: Spannmutter
- 7: Steuerplatine
- 8: Stapelanordnung
- 9: Kontakt
- 10: Rotationsachse
- 11: proximales Ende
- 12: Gegenkontakt
- 13: Befestigungsabschnitt
- 14: Deckel
- 15: Elektronik
- 16: Außenhülle
- 17: Antenne
- 18: Schutzabdeckung
- 19: Greiferrille
- 20: Funkschnittstelle
- 21: Kollektor
- 22: Speichermedium
- 23: Energiequelle
- 24: Bohrung
- 25: Datenverbindung
- 26: Cloud
- 27: Computer
- 28: Benutzer
- 29: Steuerung
- 30: Bearbeitungsmaschine
- 31: Regelkreis
- 32: Antriebsspindel
- 33: Spannmittel
- 34: Werkstück
- 35: Maschinenbett
- 36: Bearbeitungsraum
- 37: Steilkegel

## Patentansprüche

1. Steuerplatine (7), die in einen Werkzeughalter (1) oder eine Werkzeugaufnahme (4) eingebracht oder einbringbar ist, und welche insbesondere wenigstens einen Sensor und wenigstens ein Speichermedium enthält und/oder mit einer Funkschnittstelle (20) ausgestattet ist, um einen Bearbeitungsprozess auf einer Bearbeitungsmaschine (30) in Echtzeit zu überwachen, wobei die Steuerplatine (7) im eingebauten Zustand und während des Betriebs einer Bearbeitungsmaschine (30) Prozess- und Messdaten von einem in dem Werkzeughalter (1) montierten Werkzeug (5) lesen kann.

2. Steuerplatine (7), insbesondere nach Anspruch 1, die in einen Werkzeughalter (1) oder eine Werkzeugaufnahme (4) eingebracht oder einbringbar ist, und welche insbesondere wenigstens einen Sensor und wenigstens ein Speichermedium enthält und/oder mit einer Funkschnittstelle (20) ausgestattet ist, um einen Bearbeitungsprozess auf einer Bearbeitungsmaschine (30) in Echtzeit zu überwachen, wobei die Steuerplatine (7) im eingebauten Zustand und während des Betriebs einer Bearbeitungsmaschine Prozess- und Messdaten auf ein in dem Werkzeughalter (1) montiertes Werkzeug (5) schreiben kann.

3. Steuerplatine (7) nach Anspruch 1 oder 2, wobei die Steuerplatine (7) durch ihre Bauform von einer der Antriebsspindel (32) zugewandten Seite her, in einen Hohlschaftkegel (2) oder Steilkegel (37) eines Werkzeughalters (1) eingesetzt werden kann.

4. Steuerplatine (7) nach einem der vorangehenden Ansprüche, wobei die Steuerplatine (7) bezogen auf die Rotationsachse (10) des Werkzeughalters (1) einen vorzugsweise mittigen Kontakt (9) zur Verbindung mit dem montierten Werkzeug (5) hat oder beim Einbau vorübergehend Kontakt herstellen kann.

5. Steuerplatine (7) nach einem der vorangehenden Ansprüche, wobei die Steuerplatine (7) im eingebauten Zustand und während des Betriebs der Bearbeitungsmaschine Werkzeugdaten, insbesondere Vorgabewerte für den Einsatz und Messwerte aus dem Einsatz, vom Werkzeug (5) lesen kann und/oder auf das Werkzeug (5) schreiben kann.

6. Steuerplatine (7) nach einem der vorangehenden Ansprüche, die Daten mittels einer auf einer Außenhülle des Werkzeughalters, insbesondere unmittelbar unterhalb der Greiferrille (19) und/oder unter einer ringförmigen Schutzabdeckung (18), angebrachten Antenne (17) kommuniziert.

7. Steuerplatine (7) nach einem der vorangehenden Ansprüche, die in der Lage ist mit IoT-Systemen und Komponenten solcher Systeme zu kommunizieren.

8. Steuerplatine (7) nach einem der vorangehenden Ansprüche, die als Bestandteil eines Regelkreises (31) integriert werden und Daten im Prozess aufnehmen und bereitstellen kann.

9. Steuerplatine (7) nach einem der vorangehenden Ansprüche, wobei die Steuerplatine (7) im Werkzeughalter (1) gewartet werden kann oder falls erforderlich, aufgrund Ihrer Einbauart auch nachträglich ausgetauscht werden kann.

10. Steuerplatine (7) nach einem der vorangehenden Ansprüche, wobei eine Energiequelle (23) der Steuerplatine (7) im Werkzeughalter (1) angeordnet ist und insbesondere ausgetauscht werden kann ohne die Steuerplatine (7) zu entfernen.

11. Werkzeughalter (1) mit einer Steuerplatine (7) nach einem der vorangehenden Ansprüche.

12. Werkzeughalter (1) nach Anspruch 11, **dadurch gekennzeichnet, dass** die Steuerplatine (7) in einer Bohrung (24), insbesondere Axialbohrung, angeordnet ist, insbesondere wobei wenigstens ein Kontakt (9) der Steuerplatine (7) in eine Werkzeugaufnahme (4) des Werkzeughalters (1) ragt.

13. Werkzeughalter (1) nach Anspruch 11 oder 12, **dadurch gekennzeichnet, dass** in dem Werkzeughalter (1) eine Energiequelle (23) für die Steuerplatine (7) angeordnet ist.

14. Werkzeughalter (1) nach einem der Ansprüche 11 bis 13, **dadurch gekennzeichnet, dass** an einer Außenhülle (16) des Werkzeughalters, insbesondere unmittelbar unterhalb einer Greiferrille (19) und/oder unter einer ringförmigen Schutzabdeckung (18), eine Antenne (17) ausgebildet ist, die mit der Steuerplatine (7) zur Ausbildung einer Funkschnittstelle (20) elektrisch verbunden ist.

15. Werkzeug (5), das von einem Werkzeughalter (1) mit einer Steuerplatine (7) nach einem der Ansprüche 1 bis 10 aufgenommen werden kann und das mit einem elektronisch auslesbaren Speichermedium (22) ausgerüstet und/oder mit wenigstens einem Sensor, insbesondere mehreren Sensoren, ausgestattet, um im eingebauten Zustand und während des Einsatzes Daten, insbesondere Prozesskennwerte und Messdaten aufzunehmen und an die Steuerplatine (7) weiterzugeben, ist.

16. Werkzeug (5) nach Anspruch 15, wobei das Speichermedium (22) und/oder der wenigstens eine Sensor mit wenigstens einem Gegenkontakte (12) verbunden ist/sind, die in einem zur Aufnahme in dem Werkzeughalter (1) eingerichteten Befestigungsabschnitt (13) des Werkzeugs (5) angeordnet sind.

17. Verwendung einer Steuerplatine (7), insbesondere einer Steuerplatine (7) nach einem der Ansprüche 1 bis 10, in einem Werkzeughalter (1), insbesondere in einem Werkzeughalter (1) nach einem der Ansprüche 11 bis 14, zum Auslesen von an einem in den Werkzeughalter (1) eingesetzten Werkzeug, insbesondere einem Werkzeug (5) nach einem der Ansprüche 15 oder 16, bereitgestellten Daten, insbesondere wobei die Steuerplatine (7) die ausgelesenen Daten über eine Funkschnittstelle (20) abgibt und/oder empfängt.

18. Bearbeitungsmaschine (30) mit einem Werkzeughalter (1) nach einem der Ansprüche 11 bis 14 und einem Werkzeug (5) nach einem der Ansprüche 15 oder 16, insbesondere zu einer Verwendung nach Anspruch 17, insbesondere wobei eine Steuerung der Bearbeitungsmaschine (30) über die oder eine Funkschnittstelle (20) mit der Steuerplatine (7), insbesondere einer Steuerplatine (7) nach einem der Ansprüche 1 bis 10, verbindbar und/oder verbunden ist.
